# EUROPEAN PATENT SPECIFICATION

(11) **EP 4 312 628 B1**
(45) Date of publication and mention of the grant of the patent: **15.07.2026**
(21) Application number: 22828645.6
(22) Date of filing: 09.06.2022
(51) Int. Cl.: A24F 40/50, A24F 40/485, A24F 40/51, A24F 40/53, G08B 5/22, G08B 3/10, G08B 6/00, A24F 40/46, H02M 1/00, H05B 6/36

(54) **AEROSOL-GENERATING DEVICE AND OPERATING METHOD THEREOF**
AEROSOLERZEUGUNGSVORRICHTUNG UND BETRIEBSVERFAHREN DAFÜR
DISPOSITIF DE GÉNÉRATION D'AÉROSOL ET SON PROCÉDÉ DE FONCTIONNEMENT

(30) Priority: 23.06.2021 KR 20210081853
(43) Date of publication of application: 07.02.2024
(73) Proprietor: KT&G Corporation, Daedeok-gu Daejeon 34337 (KR)
(72) Inventor: KIM, Yong Hwan, Anyang-si, Gyeonggi-do 13970 (KR); KIM, Dong Sung, Seoul 06310 (KR); LEE, Seung Won, Gwangmyeong-si, Gyeonggi-do 14293 (KR); JANG, Seok Su, Daejeon 34337 (KR); HAN, Dae Nam, Seoul 06344 (KR)
(74) Representative: AWA Sweden AB
(86) International application number: PCT/KR2022/008141
(87) International publication number: WO 2022/270798

(56) References cited:
- WO-A2-2020/213916
- CN-A- 112 438 438
- JP-A- H0 242 318
- US-A1- 2012 186 594
- US-A1- 2017 105 452
- US-A1- 2017 105 452
- US-A1- 2017 231 276
- US-A1- 2018 029 782
- US-A1- 2020 359 697
- US-A1- 2021 007 393

## Description

### Technical Field

Embodiments of the present disclosure relate to an aerosol-generating device and an operating method thereof, and more particularly, to an aerosol-generating device capable of detecting a user's puff through an inductance change according to an airflow, and an operating method of the aerosol-generating device.

### Background Art

In recent years, there has been an increasing demand for an alternative method that overcomes the disadvantages of conventional cigarettes. For example, there is an increasing demand for a method of generating an aerosol by heating an aerosol-generating material, rather than a method of burning a cigarette to generate an aerosol. Accordingly, studies on heating-type aerosol-generating devices have been actively conducted.

An aerosol-generating device may determine its own use state and transmit information about its use state to a user. For example, the aerosol-generating device may detect a user's puff. According to a conventional method of detecting a user's puff, a pressure sensor is disposed in a chamber separate from an airflow passage, but in this conventional method, the arrangement position of the pressure sensor is limited. In addition, the conventional method is not only vulnerable to contamination, but also has poor puff detection performance.

The document - US2017/231276A1 - discloses an aerosol-generating system includes a liquid-storage portion configured to hold a liquid aerosol-forming substrate, a first electrode, a second electrode, and a control system. The second electrode is spaced from the first electrode. At least a portion of the liquid storage portion is arranged between the first electrode and the second electrode. The control system is configured to measure an electrical quantity between the first electrode and the second electrode, and detect a draw on the aerosol-generating system based on the measured electrical quantity information.

The document - WO2022/213916A2 - discloses a method of counting the number of puffs using an aerosol generating device. The method includes obtaining a first start time which is a time when a pressure measured by a sensor included in the aerosol generating device decreases below a first reference pressure value; obtaining a first end time which is a time when the pressure measured by the sensor reaches the first reference pressure value after the first start time; determining whether a first period, which is a period between the first end time and the first start time, is longer than or equal to a first reference period; and increase the number of puffs by one based on the first period being longer than or equal to the first reference period.

### Disclosure of Invention

### Technical Problem

Embodiments provide an aerosol-generating device capable of precisely detecting a user's puff by detecting a minute airflow, and an operating method of the aerosol-generating device.

The technical problems solved by embodiments of the present disclosure are not limited to the aforementioned technical problem, and technical problems that are not mentioned may be clearly understood by one of ordinary skill in the art to which the embodiments belong from the present specification and the accompanying drawings.

### Solution to Problem

The problem is solved by an aerosol-generating device according to the invention as defined by independent claim 1 and by a method of operating an aerosol-generating device according to independent claim 13.

### Advantageous Effects of Invention

The aerosol-generating device according to the invention as defined by the claims implements a highly sensitive puff detection function through a sensor that sensitively responds to an airflow.

In addition, the sensor included in the aerosol-generating device according to the invention as defined by the claims has a relatively small volume and may be disposed at any position where the airflow occurs, and thus, a freer internal design of the aerosol-generating device may be possible.

However, effects of embodiments of the present disclosure are not limited to the above effects, and effects that are not mentioned can be clearly understood by one of ordinary skill in the art from the present specification and the attached drawings.

### Brief Description of Drawings

FIG. 1 is a view illustrating an aerosol-generating device according to an embodiment of the present disclosure.
FIG. 2 is a view illustrating an aerosol-generating device according to another embodiment of the present disclosure.
FIG. 3 is a view illustrating an aerosol-generating device according to another embodiment of the present disclosure.
FIG. 4 is a graph for explaining a puff detection method of an aerosol-generating device.
FIG. 5A is a view illustrating an aspect of a sensor unit including an inductor according to an embodiment of the present disclosure.
FIG. 5B is a view illustrating another aspect of the sensor unit including the inductor according to an embodiment of the present disclosure.
FIG. 5C is a view illustrating another aspect of the sensor unit including the inductor according to an embodiment of the present disclosure.
FIG. 6 is a view illustrating a sensor unit including a plurality of inductors according to an embodiment of the present disclosure.
FIG. 7A is a view illustrating an aspect of a sensor unit according to an embodiment of the present disclosure.
FIG. 7B is a view illustrating another aspect of the sensor unit according to an embodiment of the present disclosure.
FIG. 7C is a view illustrating another aspect of the sensor unit according to an embodiment of the present disclosure.
FIG. 8A is a view illustrating an aspect of a sensor unit according to another embodiment of the present disclosure.
FIG. 8B is a view illustrating another aspect of the sensor unit according to another embodiment of the present disclosure.
FIG. 9A is a view illustrating an aspect of a sensor unit according to another embodiment of the present disclosure.
FIG. 9B is a view illustrating another aspect of the sensor unit according to another embodiment of the present disclosure.
FIG. 10 is a flowchart illustrating an operating method of an aerosol-generating device according to an embodiment of the present disclosure.

### Best Mode for Carrying out the Invention

According to the invention, an aerosol-generating device is provided. The aerosol-generating device includes: a housing including an airflow passage into which external air is introduced; a sensor unit including an inductor, the sensor unit being disposed in the airflow passage configured to deform in shape based on an airflow through the airflow passage; and a processor connected to the sensor unit, wherein the processor is configured to: measure an inductance value, of the inductor, that changes according to a degree of deformation of the sensor unit; and detect a puff of a user based on the measured inductance value maintaining above a first predetermined threshold for a first predetermined time interval.

According to the invention, the processor is further configured to detect the puff of the user based on the measured inductance value being maintained above the first predetermined threshold for the first predetermined time interval and then being maintained above a second predetermined threshold for a second predetermined time interval.

According to the invention, the second predetermined threshold is less than the first predetermined threshold, and the second predetermined time interval is less than the first predetermined time interval.

According to one or more embodiments, the aerosol-generating device further includes a user interface, wherein the processor is further configured to control the user interface of the aerosol-generating device to output an indication of the detected puff to the user.

According to one or more embodiments, the user interface is configured output the indication visually, auditorily, or haptically.

According to one or more embodiments, the aerosol-generating device further includes a heater configured to heat an aerosol-generating material, wherein the processor is further configured to control power applied to the heater based upon detecting the puff of the user.

According to one or more embodiments, the aerosol-generating device further includes a heater configured to heat an aerosol-generating material, wherein the processor is further configured to detect the puff of the user based on the heater being activated.

According to one or more embodiments, the sensor unit further includes: a panel that is configured to deform based on the airflow; and a base on which the panel and the inductor are disposed, wherein the inductance value of the inductor changes in response to deformation of at least one of the panel and the base.

According to one or more embodiments, the base includes a cantilever, and the cantilever protrudes from an inner surface of the airflow passage.

According to one or more embodiments, the base includes a plurality of holes allowing passage of the airflow, and the base covers at least a portion of the airflow passage.

According to one or more embodiments, the aerosol-generating device further includes a chamber branched at one point of the airflow passage so that the airflow enters the chamber from the airflow passage and exits the chamber to the airflow passage, wherein the sensor unit is disposed in the chamber.

According to one or more embodiments, the base covers at least a portion of the chamber.

According to one or more embodiments, the inductor includes a planar coil.

According to one or more embodiments, the sensor unit includes an array of a plurality of inductors, including the inductor, and the plurality of inductors includes a plurality of planar coils.

According to the invention, an operating method of an aerosol-generating device is provided. The operating method includes: measuring an inductance value through a sensor unit of the aerosol-generating device, the sensor unit including an inductor, the sensor unit being disposed in an airflow passage into which external air is introduced and configured to deform in shape based on an airflow through an airflow passage of the aerosol-generating device; and detecting a puff of a user based on the measured inductance value being maintained above a first predetermined threshold for a first predetermined time interval and then being maintained above a second predetermined threshold for a second predetermined time interval; wherein the second predetermined threshold is less than the first predetermined threshold, and the second predetermined time interval is less than the first predetermined time interval.

### Mode for the Invention

With respect to the terms used to describe the various embodiments, general terms which are currently and widely used are selected in consideration of functions of structural elements in the various embodiments of the present disclosure. However, meanings of the terms can vary according to intention, a judicial precedence, the appearance of new technology, and the like. In addition, in certain cases, a term which is not commonly used can be selected. In such a case, the meaning of the term will be described in detail at the corresponding portion in the description of the present disclosure. Therefore, the terms used to describe the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er," "-or," and "module" described in the specification mean units for processing at least one function and/or operation and can be implemented by hardware components or software components and combinations thereof.

As used herein, when an expression such as "at least one" precedes a series of elements, the expression modifies all elements rather than each of the elements. For example, the expression "at least one of a, b, and c" indicates only a, only b, only c, both a and b, both a and c, both b and c, all of a, b, and c, or variations thereof.

Hereinafter, non-limiting example embodiments of present disclosure will now be described more fully with reference to the accompanying drawings, such that one of ordinary skill in the art may easily work the present disclosure. Embodiments of the present disclosure may, however, be embodied in many different forms and should not be construed as being limited to the example embodiments set forth herein.

In addition, while such terms as "first," "second," etc., may be used to describe various components, such components must not be limited to the above terms. The above terms are used only to distinguish one component from another.

In addition, some of the components in the drawings may be illustrated with a slightly exaggerated size, proportion, or the like. In addition, components shown in some drawings may not be shown in other drawings.

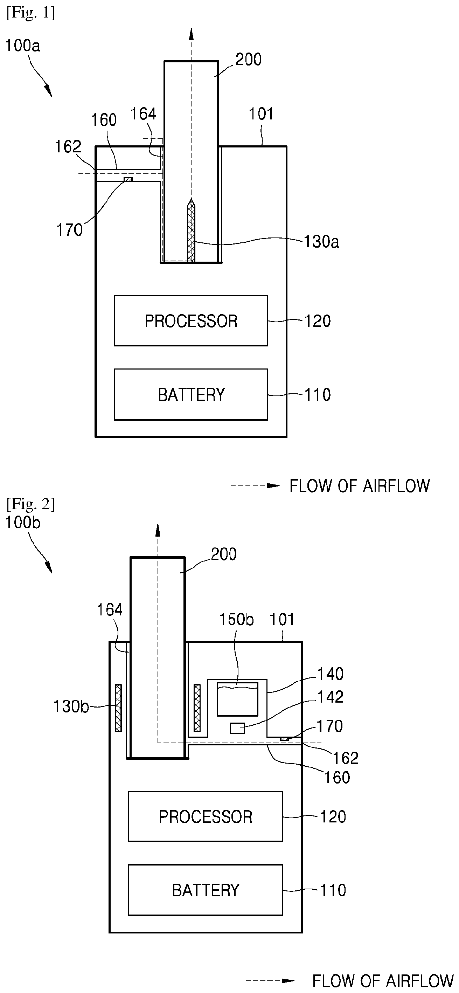

In addition, throughout the specification, the "longitudinal direction" of a component may be a direction in which the component extends in one axis direction of the component, in which case, the one axis direction of the component may refer to a direction in which the component extends more than in the other axis direction intersecting the one axis direction. For example, the longitudinal direction of an aerosol-generating device may refer to a direction parallel to a direction in which an airflow is discharged from the aerosol-generating device in FIGS. 1 to 3.

Throughout the specification, 'embodiments' are arbitrary divisions for easily describing aspects of the present disclosure, and the embodiments are not necessarily mutually exclusive. For example, configurations of an embodiment may be applied and/or implemented in other embodiments, and may be modified and applied and/or implemented without departing from the scope of the present disclosure.

In addition, the terms used in the present disclosure are for describing embodiments and are not intended to limit the present embodiments. In the present disclosure, the singular also includes the plural unless otherwise specified.

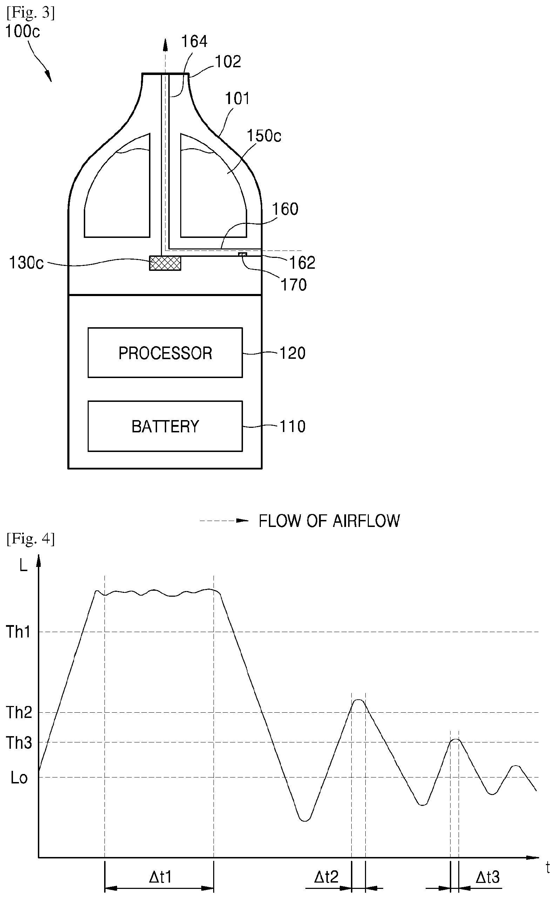

FIG. 1 is a view illustrating an aerosol-generating device according to an embodiment of the present disclosure, FIG. 2 is a view illustrating an aerosol-generating device according to another embodiment of the present disclosure, and FIG. 3 is a view illustrating an aerosol-generating device according to another embodiment of the present disclosure.

Referring to FIG. 1, an aerosol-generating device 100a according to an embodiment may include a battery 110, a processor 120, a heater 130a, an airflow passage 160, and a sensor unit 170. In addition, an aerosol-generating article 200 may be inserted into an inner space of a housing 101 of the aerosol-generating device 100a.

Referring to FIG. 2, an aerosol-generating device 100b according to another embodiment may include a battery 110, a processor 120, a heater 130b, a vaporizer 140, an airflow passage 160, and a sensor unit 170. Referring to FIG. 3, an aerosol-generating device 100c according to another embodiment may include a battery 110, a processor 120, a heater 130c, a liquid storage unit 150c, an airflow passage 160, and a sensor unit 170.

The aerosol-generating devices 100a, 100b, and 100c shown in FIGS. 1 to 3 show components related to the present embodiments. Therefore, it may be understood by one of ordinary skill in the art related to the present embodiments that other components in addition to the components shown in FIGS. 1 to 3 may be further included in the aerosol-generating device 100a, 100b, and 100c.

When the aerosol-generating article 200 is inserted into the aerosol-generating devices 100a and 100b, the aerosol-generating devices 100a and 100b may respectively activate the heaters 130a and 130b and/or the vaporizer 140 to generate an aerosol from the aerosol-generating article 200 and/or the vaporizer 140. The aerosol generated by the heaters 130a and 130b and/or the vaporizer 140 passes through the aerosol-generating article 200 and is delivered to a user. In this case, the aerosol may mean a gas in a state in which vaporized particles generated from an aerosol-generating material are mixed with air.

According to some embodiments, even when the aerosol-generating article 200 is not inserted into the aerosol-generating devices 100a, 100b, and 100c, the aerosol-generating devices 100a, 100b, and 100c may respectively heat the heaters 130a, 130b, and 130c.

For example, the aerosol-generating device 100a according to an embodiment may remove residues in the inner space of the housing 101 by heating the heater 130a in a state in which the aerosol-generating article 200 is not inserted.

As another example, the aerosol-generating device 100c according to another embodiment may generate an aerosol by converting a phase of an aerosol-generating material stored in the liquid storage unit 150c into a gaseous phase in a state in which the aerosol-generating article 200 is not inserted. The battery 110 supplies power used to operate the aerosol-generating devices 100a, 100b, and 100c. For example, the battery 110 may supply power so that the heaters 130a, 130b, and 130c or the vaporizer 140 may be heated, and may supply power for the processor 120 to operate. In addition, the battery 110 may supply power to operate a display, a sensor, a motor, etc. installed in the aerosol-generating devices 100a, 100b, and 100c.

The processor 120 controls the overall operations of the aerosol-generating devices 100a, 100b, and 100c. Specifically, the processor 120 controls the operations of the battery 110, the heaters 130a, 130b, and 130c, and the vaporizer 140, as well as the operations of other components included in the aerosol-generating devices 100a, 100b, and 100c. In addition, the processor 120 may determine whether the aerosol-generating devices 100a, 100b, and 100c is in an operable state by checking the state of each of the components of the aerosol-generating devices 100a, 100b, and 100c.

The processor 120 may be implemented as an array of a plurality of logic gates, or may be implemented as a combination of a general-purpose microprocessor and a memory in which a program executable in the microprocessor is stored. In addition, it may be understood by one of ordinary skill in the art that the processor 120 may be implemented as other types of hardware.

The heaters 130a, 130b, and 130c may be operated by power supplied from the battery 110. For example, when the aerosol-generating article 200 is inserted into the aerosol-generating device 100b, the heater 130b may be located outside the aerosol-generating article 200. Accordingly, the heater 130b that is heated may raise the temperature of an aerosol-generating material within the aerosol-generating article 200.

The heaters 130a, 130b, and 130c may be electrically resistive heaters. For example, each of the heaters 130a, 130b, and 130c may include an electrically conductive track and may be heated as current flows through the electrically conductive track. However, each of the heaters 130a, 130b, and 130c is not limited to the above example, and any heater that is capable of being heated to a desired temperature may be applied without limitation. In this case, the desired temperature may be preset in the aerosol-generating devices 100a, 100b, and 100c, or may be set by a user.

As another example, the heaters 130a, 130b, and 130c may be induction heating-type heaters. Specifically, each of the heaters 130a, 130b, and 130c may include an electrically conductive coil for heating the aerosol-generating article 200 in an induction heating manner, and the aerosol-generating article 200 may include a susceptor capable of being heated by an induction heating-type heater.

For example, each of the heaters 130a, 130b, and 130c may include a tubular heating element, a plate-shaped heating element, a needle-shaped heating element, or a rod-shaped heating element, and may heat the interior or exterior of the aerosol-generating article 200 depending on the shape of a heating element therein.

In addition, a plurality of heaters may be arranged in each of the aerosol-generating devices 100a, 100b, and 100c. In this case, the plurality of heaters may be arranged to be inserted into the aerosol-generating article 200, or may be arranged outside the aerosol-generating article 200. In addition, some of the plurality of heaters may be arranged to be inserted into the aerosol-generating article 200, and others may be arranged outside the aerosol-generating article 200. In addition, the shapes of the heaters are not limited to the shapes shown in FIGS. 1 to 3, and the heaters may be manufactured to have various shapes.

The aerosol-generating article 200 may be similar to a general combustible cigarette. For example, the aerosol-generating article 200 may be divided into a first part including an aerosol-generating material and a second part including a filter or the like. Alternatively, the second part of the aerosol-generating article 200 may also include an aerosol-generating material. For example, an aerosol-generating material made in the form of granules or capsules may be inserted into the second part.

A tobacco rod included in the aerosol-generating article 200 may include an aerosol-generating material. For example, the aerosol-generating material may include, but is not limited to, at least one of glycerin, propylene glycol, ethylene glycol, dipropylene glycol, diethylene glycol, triethylene glycol, tetraethylene glycol, and oleyl alcohol. In addition, the tobacco rod may contain a flavoring agent, a wetting agent, and/or other additives such as an organic acid. In addition, a flavoring liquid such as menthol or a moisturizing agent may be added to the tobacco rod by being sprayed onto the tobacco rod.

The tobacco rod may be manufactured in various ways. For example, the tobacco rod may be manufactured as a sheet or as a strand. In addition, the tobacco rod may be made of cut tobacco obtained by cutting a tobacco sheet. In addition, the tobacco rod may be surrounded by a heat-conducting material. For example, the heat-conducting material may be, but is not limited to, a metal foil such as aluminum foil. For example, the heat-conducting material surrounding the tobacco rod may improve thermal conductivity, applied to the tobacco rod, by evenly distributing the heat transferred to the tobacco rod, thereby improving a tobacco taste. Additionally, the heat-conducting material surrounding the tobacco rod may function as a susceptor that is heated by an induction heating-type heater. In this case, although not shown in the drawings, the tobacco rod may further include an additional susceptor in addition to the heat-conducting material surrounding the exterior of the tobacco rod.

The entire first part may be inserted into the aerosol-generating devices 100a and 100b, and the second part may be exposed to the outside. Alternatively, only a portion of the first part may be inserted into the aerosol-generating devices 100a and 100b, or the entire first part and a portion of the second part may be inserted thereinto. A user may inhale the aerosol while biting the second part. In this case, the aerosol is generated as the external air passes through the first part, and the generated aerosol is delivered to the user's mouth through the second part.

As another example, the aerosol-generating devices 100b and 100c may generate an aerosol from an aerosol-generating material by using an ultrasonic vibration method. The ultrasonic vibration method may refer to a method of generating an aerosol by atomizing an aerosol-generating material with ultrasonic vibration generated by a vibrator. The aerosol-generating material may be vaporized and/or atomized into an aerosol by the short-period vibration generated by the vibrator. The vibrator may include, for example, piezoelectric ceramic. The piezoelectric ceramic is a functional material that may convert electricity and mechanical force to each other by generating electricity (voltage) by a physical force (pressure) and generating vibration (mechanical force) when electricity is applied to the piezoelectric ceramic.

The vaporizer 140 may heat a liquid composition to generate an aerosol, and the generated aerosol may pass through the aerosol-generating article 200 and be delivered to a user. In other words, the aerosol generated by the vaporizer 140 may move along an airflow passage of the aerosol-generating device 100b, and the airflow passage may be configured such that the aerosol generated by the vaporizer 140 may pass through the aerosol-generating article 200 and be delivered to a user.

For example, the vaporizer 140 may include, but is not limited to, a liquid storage unit 150b, a liquid delivery unit, and a heating element 142. For example, the liquid storage unit 150b, the liquid delivery unit, and the heating element 142 may be included in the aerosol-generating device 100b as independent modules.

The liquid storage units 150b and 150c may each store a liquid composition. For example, the liquid composition may be a liquid including a tobacco-containing material including a volatile tobacco flavor component, or may be a liquid including a non-tobacco material. The liquid storage unit 150b may be manufactured to be detachably attached to the vaporizer 140, or may be manufactured integrally with the vaporizer 140.

For example, the liquid composition may include water, a solvent, ethanol, a plant extract, a flavoring, a flavoring agent, or a vitamin mixture. The flavoring may include, but is not limited to, menthol, peppermint, spearmint oil, various fruit flavoring ingredients, or the like. The flavoring agent may include ingredients capable of providing a user with a variety of flavors or savors. The vitamin mixture may be a mixture of at least one of vitamin A, vitamin B, vitamin C, and vitamin E, but is not limited thereto. The liquid composition may also include an aerosol former such as glycerin and propylene glycol.

For example, the liquid composition may include a solution of glycerin or propylene glycol in any weight ratio, to which a nicotine salt has been added. The liquid composition may include two or more types of nicotine salts. The nicotine salts may be formed by adding, to nicotine, a suitable acid including organic or inorganic acid. The nicotine is naturally occurring nicotine or synthetic nicotine and may have any suitable weight concentration relative to the total solution weight of the liquid composition.

The acid for the formation of the nicotine salts may be appropriately selected by considering a blood nicotine absorption rate, the operating temperatures of the aerosol-generating devices 100b and 100c, flavor or savor, solubility, and the like. For example, the acid for the formation of nicotine salts may include a single acid selected from the group consisting of benzoic acid, lactic acid, salicylic acid, lauric acid, sorbic acid, levulinic acid, pyruvic acid, formic acid, acetic acid, propionic acid, butyric acid, valeric acid, caproic acid, caprylic acid, capric acid, citric acid, myristic acid, palmitic acid, stearic acid, oleic acid, linoleic acid, linolenic acid, phenylacetic acid, tartaric acid, succinic acid, fumaric acid, gluconic acid, saccharic acid, malonic acid, and malic acid, or a mixture of two or more acids selected from the group, but is not limited thereto.

The liquid delivery unit may deliver the liquid composition in the liquid storage unit 150b to the heating element 142. For example, the liquid delivery unit may be, but is not limited to, a wick including cotton fiber, ceramic fiber, glass fiber, or porous ceramic.

The heating element 142 is an element for heating the liquid composition delivered by the liquid delivery unit. For example, the heating element 142 may be a metal heating wire, a metal heating plate, a ceramic heater, or the like, but is not limited thereto. Furthermore, the heating element 142 may be composed of a conductive filament such as a nichrome wire and may be disposed in a structure wound around the liquid delivery unit. The heating element 142 may be heated by an electrical current supply and may transfer heat to a liquid composition in contact with the heating element 142, thereby heating the liquid composition. As a result, an aerosol may be generated.

For example, the vaporizer 140 may be referred to as a cartomizer or an atomizer, but is not limited thereto.

The airflow passage 160 is a passage through which the airflow may move in the aerosol-generating devices 100a, 100b, and 100c. The airflow passage 160 may be included or formed in the interior of the housing 101 so that the airflow flows through the interiors of the aerosol-generating devices 100a, 100b, and 100c. For example, external air may be introduced through at least one through-hole formed in each of the aerosol-generating devices 100a, 100b, and 100c and discharged to the outside of each of the aerosol-generating devices 100a, 100b, and 100c.

The airflow passage 160 may extend from a first through-hole 162 located in at least one area of the housing 101 to a second through-hole 164 located in another area of the housing 101 along the inside of the housing 101. When a user inhales through the aerosol-generating device 100a, 100b, or 100c, external air may be introduced into the housing 101 through the first through-hole 162, and the introduced external air may be discharged to the outside of the aerosol-generating device 100a, 100b, or 100c through the second through-hole 164 together with an aerosol generated inside the aerosol-generating device 100a, 100b, or 100c.

In addition, referring to FIG. 1, external air may be introduced into the interior of the housing 101 through the second through-hole 164, and the introduced external air may be introduced into the aerosol-generating article 200 through at least one hole formed in the surface of the aerosol-generating article 200 and may be discharged through one end of the aerosol-generating article 200 exposed to the outside of the aerosol-generating device 100a.

The first through-hole 162 may be formed not only as a hole in the housing 101 of each of the aerosol-generating devices 100a, 100b, and 100c, but also as a gap between various members forming the housing 101 of each of the aerosol-generating devices 100a, 100b, and 100c.

For example, as shown in FIGS. 1 and 2, the second through-hole 164 may be formed through an inner space of each of the aerosol-generating devices 100a and 100b into which the aerosol-generating article 200 is inserted. As another example, as shown in FIG. 3, the second through-hole 164 may be disposed in a mouthpiece 102 that comes into contact with a user's mouth for inhalation through the aerosol-generating device 100c.

In FIGS. 1 and 3, the battery 110, the processor 120, and the heater 130a or 130c are arranged in a line, and the airflow passage 160 extends from the side of one end of the aerosol generating device 100a or 100c to the inner space of the aerosol generating device 100a or 100c. In FIG. 2, the vaporizer 140 and the heater 130b are arranged in parallel, and the airflow passage 160 extends along the inner spaces of the vaporizer 140 and the housing 101 from the side of the aerosol-generating device 100b.

However, the internal structures of the aerosol-generating devices 100a, 100b, and 100c are not limited to those shown in FIGS. 1 to 3. In other words, according to various embodiments of the aerosol-generating devices 100a, 100b, and 100c, the arrangements of the battery 110, the processor 120, the heater 130a, 130b, or 130c, the vaporizer 140, the airflow passage 160, and the sensor unit 170 may be changed.

The aerosol-generating devices 100a, 100b, and 100c may each further include general-purpose components in addition to the battery 110, the processor 120, the heater 130a, 130b, or 130c, the vaporizer 140, the airflow passage 160, and the sensor unit 170. For example, the aerosol-generating devices 100a, 100b, and 100c may each further include a user interface (not shown) and a memory (not shown).

The user interface may provide information about the state of each of the aerosol-generating devices 100a, 100b, and 100c to the user. The user interface may include various interfacing means, such as a display or lamp for outputting visual information, a motor for outputting tactile information, a speaker for outputting sound information, input/output (I/O) interfacing units (e.g., a button or a touch screen) for receiving information input from a user or outputting information to the user, terminals for data communication or receiving charging power, and a communication interfacing module for performing wireless communication (e.g., WI-FI, WI-FI Direct, Bluetooth, Near-Field Communication (NFC), etc.) with external devices.

The memory is hardware for storing various data processed in the aerosol-generating device 100a, 100b, and 100c, and may store data processed by the processor 120 and data to be processed by the processor 120. The memory may be implemented with various types of memories, such as random access memory (RAM) such as dynamic random access memory (DRAM) and static random access memory (SRAM), read-only memory (ROM), and electrically erasable programmable read-only memory (EEPROM).

The memory may store the operating times of the aerosol-generating devices 100a, 100b, and 100c, the maximum number of puffs, the current number of puffs, at least one temperature profile, and data on a user's smoking pattern.

In addition, each of the aerosol-generating devices 100a, 100b, and 100c may include other types of sensors (e.g., a temperature sensor, an aerosol-generating article insertion detection sensor, etc.).

The sensor unit 170 may include a puff detection sensor that detects a user's inhalation through the aerosol-generating devices 100a, 100b, and 100c. For example, the puff detection sensor may be a resistance-based sensor sensing a change in resistance or an inductance-based sensor sensing a change in inductance.

The sensor unit 170 may include an inductor. For example, the value of inductance of the inductor may be changed by a variable magnetic field applied from the outside. In this case, the inductance may include an effective inductance.

The sensor unit 170 may sense or measure the airflow flowing through the inside of each of the aerosol-generating devices 100a, 100b, and 100c. The sensor unit 170 may be deformed in shape by the airflow flowing through the airflow passage 160 of each of the aerosol-generating devices 100a, 100b, and 100c. The sensor unit 170 may output an inductance value corresponding to the strength of the airflow based on a change in inductance of the inductor, or an inductance value corresponding to the strength of the airflow sensed by the sensor unit 170 may be transmitted to the processor 120.

According to FIGS. 1 to 3, the sensor unit 170 is illustrated as being located on the side of the first through-hole 162 of the airflow passage 160, but may be located on the side of the second through-hole 164. That is, the position of the sensor unit 170 is not limited to the above example and may be disposed at any position where the airflow flows in the aerosol-generating devices 100a, 100b, and 100c. As such, there is no particular limitation on a position where the sensor unit 170 is disposed inside the aerosol-generating devices 100a, 100b, and 100c, and thus, a relatively free arrangement or design of the sensor unit 170 is possible. Various embodiments of the sensor unit 170 will be described later in detail with reference to other drawings.

The processor 120 may be connected to the sensor unit 170 to receive information or data sensed by the sensor unit 170, and may detect whether puffs via the aerosol-generating devices 100a, 100b, and 100c occurred. In this case, the connection between the processor 120 and the sensor unit 170 may include electrically connecting the processor 120 and the sensor unit 170 to each other, and connecting the processor 120 and the sensor unit 170 to each other to transmit and receive signals through wireless communication or to transmit and receive optical signals, magnetic signals, and the like.

The processor 120 may measure the inductance value of the inductor included in the sensor unit 170, the inductance value changing according to the degree of deformation of the sensor unit 170, and may detect a puff when the measured inductance value is maintained above a certain threshold for a predetermined time.

In this case, the predetermined time is a reference time for determining that a puff has occurred, and may correspond to, for example, 0.2 seconds to 2.0 seconds. In addition, the certain threshold is a reference value for determining that a user's puff has occurred. For example, the certain threshold may refer to a value compared with an inductance value of the sensor unit 170 that is deformed by a user's inhalation through the aerosol-generating devices 100a, 100b, and 100c.

The predetermined time and/or the certain threshold may be values previously input into the processor 120 or the memory. For example, the predetermined time and/or the certain threshold may be preset by the manufacturer of the aerosol-generating devices 100a, 100b, and 100c, or may be set to other values by a user after the aerosol-generating devices 100a, 100b, and 100c are sold to the user. A puff detection method of the aerosol-generating devices 100a, 100b, and 100c will be described later in more detail with reference to FIG. 4.

In an embodiment, the processor 120 may analyze a result sensed by at least one sensor and control processes to be subsequently performed. For example, the processor 120 may output a detected puff in a predetermined method. In this case, the predetermined method may include at least one of a visual method, an auditory method, and a tactile method.

The processor 120 may control the user interface based on a result sensed by the sensor unit 170. The user interface may include a display, a light-emitting diode (LED), a speaker, a vibration motor, and the like. For example, the processor 120 may count the number of puff occurrences by using the puff detection sensor and output the number of remaining puffs through a display.

In this case, the 'number of remaining puffs' may refer to the number of remaining puffs obtained by subtracting the number of user's puffs counted so far from the 'appropriate number of puffs' predetermined to correspond to characteristics such as the type or size of the aerosol-generating article 200 or characteristics such as the type or amount of material stored in the liquid storage units 150b and 150c. The appropriate number of puffs may be stored in the memory or in the processor 120.

In addition, when the number of puffs reaches a predetermined number after the number of puff occurrences is counted, the processor 120 may notify a user through the user interface that the operations of the aerosol-generating devices 100a, 100b, and 100c will be terminated soon.

In another embodiment, based on a result sensed by a different type of sensor, the processor 120 may control the power supplied to the heaters 130a, 130b, and 130c to start or end the operations of the heaters 130a, 130b, and 130c. In addition, based on a result sensed by a different type of sensor, the processor 120 may control the amount of power supplied to the heaters 130a, 130b, and 130c and a power supply time so that the heaters 130a, 130b, and 130c may be heated to a certain temperature or maintain an appropriate temperature.

For example, when detecting a puff, the processor 120 may control the power applied to the heaters 130a, 130b, and 130c. In an example, when the processor 120 detects a puff and determines that a user has inhaled through the aerosol-generating devices 100a, 100b, and 100c, the processor 120 may preheat the heaters 130a, 130b, and 130c. Accordingly, when the user inhales through the aerosol-generating devices 100a, 100b, and 100c, the generation of an aerosol may be easily started.

As another example, when the processor 120 detects a user's puff and determines that a user has inhaled through the aerosol-generating devices 100a, 100b, and 100c, the processor 120 may increase the power supplied to the heaters 130a, 130b, and 130c to improve a heating temperature. That is, the processor 120 may increase the heating temperature of the heaters 130a, 130b, and 130c whenever a user inhales through the aerosol-generating devices 100a, 100b, and 100c, and thus may increase the amount of aerosol generated according to the user's inhalation time.

In another embodiment, the processor 120 may detect user's puffs through the aerosol-generating devices 100a, 100b, and 100c when the heaters 130a, 130b, 130c are operated. For example, the processor 120 may measure an inductance value of the sensor unit 170 only when the heaters 130a, 130b, and 130c heat aerosol-generating articles inserted in the aerosol-generating devices 100a, 100b, and 100c, and may not measure the inductance value when the heaters 130a, 130b, and 130c do not heat the aerosol-generating articles.

As another example, the processor 120 may measure the inductance value of the sensor unit 170 only when the heater 130c operates to heat a liquid composition supplied from the liquid storage unit 150c, and may not measure the inductance value when the heater 130c does not operate.

That is, the processor 120 may or may not measure the inductance value of the sensor unit 170 based on whether the heaters 130a, 130b, and 130c operate. Accordingly, the processor 120 may not determine whether a user's puff has occurred when the heaters 130a, 130b, and 130c do not operate, and thus, the power consumption of the aerosol-generating devices 100a, 100b, and 100c may be reduced.

In another embodiment, the processor 120 may always measure the inductance value of the sensor unit 170, and may perform another process when the heaters 130a, 130b, and 130c operate. For example, the processor 120 may detect occurrence of a user's puff through the aerosol-generating devices 100a, 100b, and 100c by determining whether the measured inductance value is maintained above a threshold for a predetermined time interval only when the heaters 130a, 130b, and 130c operate.

Although not shown in FIGS. 1 to 3, each of the aerosol-generating devices 100a, 100b, and 100c may constitute a system together with a separate cradle. For example, the cradle may be used to charge the battery 110 of each of the aerosol-generating devices 100a, 100b, and 100c. Alternatively, the heaters 130a, 130b, and 130c may operate in a state in which the cradle and the aerosol-generating device 100a, 100b, or 100c are combined with each other.

Each of the aerosol-generating devices 100a, 100b, and 100c according to the embodiments described above has a substantially rectangular cross-sectional shape in a direction intersecting a longitudinal direction. However, the shapes of the aerosol-generating devices 100a, 100b, and 100c are not limited thereto. Each of the aerosol-generating devices 100a, 100b, and 100c may have a cross-sectional shape, such as a circle, an ellipse, a square, or a polygon. In addition, when each of the aerosol-generating devices 100a, 100b, and 100c extends in the longitudinal direction, the structure thereof is not necessarily limited to a structure extending in a straight line. For example, each of the aerosol-generating devices 100a, 100b, and 100c may extend long while being curved in a streamlined shape or bent at a predetermined angle in a specific area to make it easier for a user to hold the device by hand.

FIG. 4 is a graph for explaining a puff detection method of an aerosol-generating device.

Referring to FIG. 4, a change in an inductance value L of a sensor unit measured by a processor is illustrated with the passage of time. In the graph shown in FIG. 4, the horizontal axis corresponds to a time (t) axis and the vertical axis corresponds to an inductance value (L) axis.

In an initial state in which there is no airflow, an inductor included in the sensor unit may have an initial value Lo corresponding to an initial inductance value. Because the shape of the sensor unit is deformed according to the flow of airflow, the inductance value L may change according to a change in the distance between the inductor included in the sensor unit and a panel.

For example, when a user inhales through the aerosol-generating device, at least a portion of the sensor unit is deformed by the airflow, and accordingly, the inductance value L may change. In this case, when a user's inhalation power is sufficiently strong, the inductance value L measured in the sensor unit may increase to a value greater than a first threshold Th1, and when the user's inhalation power is relatively weak, the inductance value L may increase only to a value less than the first threshold Th1.

During the user's inhalation, the inductance value L may be maintained at a certain value or more. For example, the measured inductance value L may be maintained above the first threshold Th1 for a predetermined first time interval △t1. In this case, the first time interval △t1 is an example of the aforementioned predetermined time, and may correspond to 1 second to 2 seconds.

A weak airflow may be generated inside the aerosol-generating device due to minute vibrations or a minute pressure difference in the atmosphere. At this time, even though an inductance value L lower than the first threshold Th1 is measured in the sensor unit or an inductance value L greater than or equal to the first threshold Th1 is measured, the change in inductance may last only for a time shorter than a predetermined time. The processor may not determine that a puff has occurred by determining a change in the measured inductance value L as noise.

That is, the processor may detect a puff for the aerosol-generating device by considering not only a user's inhalation power but also the duration of the user's inhalation. Specifically, the processor may determine that no puff has occurred when only the inhalation power is strong or only the inhalation duration is long, but may determine that a puff has occurred only when both a condition for the inhalation power and a condition for the inhalation duration are satisfied. Accordingly, a puff detection function that is relatively more robust to noise and has improved sensitivity and accuracy may be implemented.

When the user's inhalation is terminated, the flow of the airflow in the aerosol-generating device is stopped and the shape of the deformed sensor unit may be restored. Depending on the deformation state of the sensor unit or the deformation aspect of the sensor unit, the inductance value L may converge to the initial value Lo while attenuating between a maximum value and a minimum value less than the initial value Lo.

In the example shown in FIG. 4, the sensor unit vibrates and is restored to a state in which there is no airflow, and the inductance value L correspondingly may change between the first threshold Th1 and a value less than the initial value Lo and converge to the initial value Lo.

Specifically, the inductance value L of the deformed sensor unit may increase to a value greater than the first threshold Th1, and then decrease to a value less than the initial value Lo as the user's inhalation is terminated. Accordingly, the inductance value L may be attenuated while oscillating between a measured maximum value and a minimum value less than the initial value Lo.

Although FIG. 4 illustrates a case in which the inductance value L linearly increases or decreases, the case is merely an example. That is, the inductance value L may nonlinearly increase or decrease according to a user's inhalation pattern (e.g., inhalation strength) for the aerosol-generating device and/or the characteristics (e.g., shape and structure) of the sensor unit.

In another embodiment, the processor may detect a puff when the inductance value L is maintained above or below a predetermined value for a predetermined time after the inductance value L is maintained above the first threshold Th1 for the first time interval △t1.

For example, when the inductance value L is maintained above a second threshold Th2 for a second time interval △t2 after the inductance value L is maintained above the first threshold Th1 for the first time interval △t1, the processor may determine that a user's puff has occurred and detect the puff. In this case, the second threshold Th2 may be less than the first threshold Th1, and the second time interval △t2 may be less than the first time interval △t1. For example, the first time interval △t1 may correspond to 1 second to 2 seconds, and the second time interval △t2 may correspond to 0.1 second to 0.2 seconds.

In this way, after the processor measures an increased inductance value L maintained according to a user's inhalation having sufficient strength and intensity, the processor may detect a puff by further considering a process in which the inductance value L is restored. Accordingly, the processor may consider not only the user's inhalation start but also the user's inhalation end, and thus, more accurate puff detection may be possible.

In addition, when the inductance value L is maintained above a third threshold Th3 for a third time interval △t3 after the inductance value L is maintained above the second threshold Th2 for the second time interval △t2, the processor may determine that the user's puff has occurred and detect the puff.

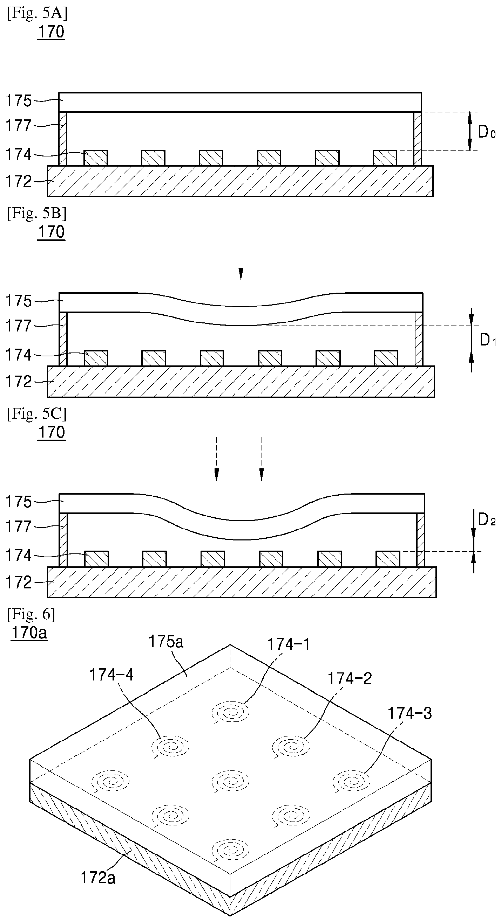

Hereinafter, specific examples of the inductor and the sensor unit will be described with reference to FIGS. 5A to 9B.

FIG. 5A is a view illustrating an aspect of a sensor unit including an inductor according to an embodiment of the present disclosure, FIG. 5B is a view illustrating another aspect of the sensor unit including the inductor according to an embodiment of the present disclosure, and FIG. 5C is a view illustrating another aspect of the sensor unit including the inductor according to an embodiment of the present disclosure.

Referring to FIGS. 5A to 5C, a sensor unit 170 may include an inductor 174, a panel 175 deformed by airflow, and a base 172 on which the inductor 174 and the panel 175 are disposed.. The panel 175 and/or the base 172 may be deformed by the airflow, and the inductance of the inductor 174 may change in response to the deformation of the panel 175 and/or the base 172. Although not shown in the drawings, the sensor unit 170 may be connected to a processor (e.g., the processor 120 of FIGS. 1 to 3) to transmit and receive electrical signals, or may be connected to a battery (e.g., the battery 110 of FIGS. 1 to 3) to receive power.

In this case, 'the inductor 174 and the panel 175 are disposed on the base 172' may mean that the inductor 174 is disposed on the base 172 such that the inductance thereof changes in response to deformation of the panel 175 and/or the base 172. For example, the inductor 174 may be mounted on the surface of the base 172 or embedded therein, and the panel 175 may be disposed to be apart from the inductor 174 by a certain distance.

The base 172 may be made of a material having low rigidity, which may be deformed by an airflow, or may be manufactured to have a shape having low rigidity. For example, the base 172 may be manufactured to have a small thickness or cross-sectional area.

The inductor 174 may include a metal material through which an electric current may flow. For example, the metal material may include, but is not limited to, copper, aluminum, nickel, silver, gold, platinum, palladium, or an alloy thereof.

The inductor 174 may be adhered to or attached to the base 172 by an adhesive material or may be coupled to the base 172 by a fastening unit. In addition, the inductor 174 may be disposed on the base 172 by a plating method, a coating method including a method such as deposition or spraying, or a printing method.

The panel 175 may include a conductive material capable of generating an eddy current. For example, the panel 175 may include a magnetic metal material (e.g., iron or aluminum). The panel 175 may have a small thickness to be deformed by an airflow, and may be manufactured to have lower rigidity than the base 172.

When the panel 175 is deformed by the airflow, the distance between the panel 175 and the inductor 174 may change. In this case, the inductance of the inductor 174 may change based on a change in the distance between the panel 175 and the inductor 174. For example, when the distance between the panel 175 and the inductor 174 through which an alternating current flows is changed, an eddy current may be generated in the panel 175, and a change in inductance of the inductor 174 may be induced due to a change in the eddy current.

In an embodiment, the sensor unit 170 may include a base 172, an inductor 174, a panel 175, and an elastic body 177 disposed between the inductor 174 and the panel 175. The elastic body 177 may include, for example, a spring or foam. The inductor 174 may be mounted on the base 172, and the elastic body 177 may be disposed between the inductor 174 and the panel 175, and thus, the inductor 174 and the panel 175 may be apart from each other by a certain distance.

The elastic body 177 may separate the panel 175 from the inductor 174, and may apply a restoring force to the panel 175 deformed by the airflow to return the panel 175 to its original position. Accordingly, the distance between the panel 175 and the inductor 174 may be changed when the airflow flows around the sensor unit 170, and the position of the panel 175 may be restored when the airflow does not flow around the sensor unit 170.

In an embodiment, inductor 174 may include a planar coil. The planar coil may have a shape wound in a circular spiral, a square spiral, or a triangular spiral, but is not limited thereto. The inductor 174 in the form of a planar coil may be easily mounted on the base 172, and miniaturization of the sensor unit 170 may be possible.

Referring to FIG. 5A, in the sensor unit 170 that has not been deformed, the distance between the inductor 174 and the panel 175 may be an initial distance D_{O}. Referring to FIG. 5B, in the sensor unit 170 deformed by an airflow with a first intensity, the distance between the inductor 174 and the panel 175 may be a first distance D₁. Referring to FIG. 5C, in the sensor unit 170 deformed by an airflow with a second intensity stronger than the first intensity, the distance between the inductor 174 and the panel 175 may be a second distance D₂.

In this case, the first distance D₁ may be less than the initial distance D_{O}, and the second distance D₂ may be less than the first distance D₁. That is, as the strength of the airflow increases, the deformation of the sensor unit 170 may increase, and accordingly, the deformation of the panel 175 included in the sensor unit 170 may also increase, and thus, the distance between the inductor 174 and the panel 175 may decrease. As a result, a change in inductance of the sensor unit 170 may appear as a larger value as the strength of the airflow increases.

FIG. 6 is a view illustrating a sensor unit including a plurality of inductors according to an embodiment.

Referring to FIG. 6, a sensor unit 170a may include a plurality of inductors. For example, the sensor unit 170a may include an array in which a plurality of planar coils 174-1, 174-2, 174-3, 174-4, ... are arranged. The plurality of planar coils 174-1, 174-2, 174-3, 174-4, ... may be disposed at a certain distance therebetween on a base 172a, and the distance between each of the plurality of planar coils 174-1, 174-2, 174-3, 174-4, ... and a panel 175a may change in response to the deformation of the panel 175a or the base 172a.

Inductance changes of the plurality of planar coils 174-1, 174-2, 174-3, 174-4, ..., which are collected by the sensor unit 170a including the plurality of planar coils 174-1, 174-2, 174-3, 174-4, ..., may be collected, and thus, inductance change in the sensor unit 170a may be more precisely sensed. For example, even though the planar coil 174-1 of the plurality of planar coils 174-1, 174-2, 174-3, 174-4, ... is damaged, the inductance changes of the remaining planar coils 174-2, 174-3, 174-4, ... may be collected, and thus, the sensor unit 170a may sense an inductance change to determine whether a puff has occurred.

As another example, even though only a portion of the sensor unit 170a or the panel 175a is locally deformed, an inductance change may be collected from at least one (e.g., the planar coil 174-1) of the plurality of planar coils 174-1, 174-2, 174-3, 174-4, ..., and thus, the sensor unit 170a may sense an inductance change for puff detection.

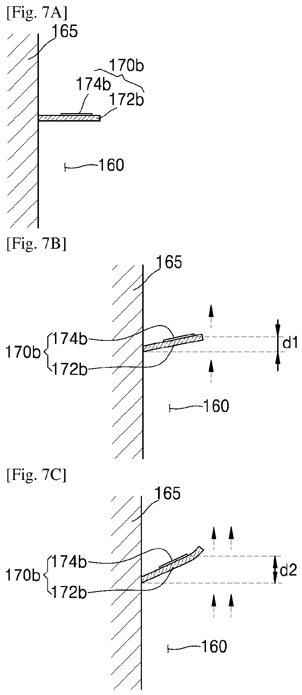

FIG. 7A is a view illustrating an aspect of a sensor unit according to an embodiment of the present disclosure, FIG. 7B is a view illustrating another aspect of the sensor unit according to an embodiment of the present disclosure, and FIG. 7C is a view illustrating another aspect of the sensor unit according to an embodiment of the present disclosure.

Referring to FIGS. 7A to 7C, a sensor unit 170b is, according to the invention, disposed in an airflow passage 160, and is deformed in shape by an airflow flowing along the airflow passage 160. For example, a base 172b included in the sensor unit 170b may be a cantilever and may protrude from at least one region of an inner surface 165 of the airflow passage 160.

The base 172b having a cantilever shape may be attached to the inner surface 165 of the airflow passage 160. For example, the base 172b may be welded or adhered to the inner surface 165 of the airflow passage 160 or coupled to the inner surface 165 by a fastening unit such as a bolt. As another example, the base 172b may be fitted into a groove formed in the inner surface 165 of the airflow passage 160.

As such, the sensor unit 170b including the base 172b having a cantilever shape may be easily disposed in the airflow passage 160. However, a method of coupling the base 172b to the airflow passage 160 is not limited thereto, and other methods in which the airflow passage 160 and the sensor unit 170b may be easily coupled to each other may be applied.

Referring to FIG. 7A, when an airflow does not flow in the airflow passage 160, the shape of the sensor unit 170b may be hardly deformed, and an inductance change according to a change in the distance between the inductor 174b and a panel (not shown) may not be sensed. However, referring to FIG. 7B, when an airflow weakly flows, the sensor unit 170b may be slightly deformed (minute deformation d₁), and a corresponding minute change in inductance may be sensed. Referring to FIG. 7C, when an airflow strongly flows, the sensor unit 170b may be deformed (deformation d₂ ), and a corresponding change in inductance may be sensed.

The minute deformation d₁ of the sensor unit 170b shown in FIG. 7b may be due to, for example, a minute airflow, according to the vibration of the aerosol-generating device or a difference in air pressure, rather than a user's inhalation through the aerosol-generating device. An inductance value of the inductor in the sensor unit 170b, which is due to the minute deformation d₁, may be less than the first threshold, and in this case, the puff may not be detected.

The deformation d₂ of the sensor unit 170b shown in FIG. 7C may be due to, for example, a user's inhalation with sufficient power through the aerosol-generating device. An inductance value of the inductor in the sensor unit 170b, which is due to the deformation d₂, may be equal to or greater than the first threshold, and in this case, a puff may be detected.

Although not shown in FIGS. 7A to 7C, a plurality of the sensor unit 170b may be arranged along the airflow passage 160. For example, a sensor unit 170b from among the plurality of the sensor unit 170b may include a base 172b having a shorter length as the sensor unit 170b is disposed closer to the outside of the aerosol-generating device as compared to others from among the plurality of the sensor unit 170b, and a sensor unit 170b from among the plurality of the sensor unit 170b may include a base 172b having a longer length as the sensor unit 170b is disposed farther from the outside of the aerosol-generating device as compared to others from among the plurality of the sensor unit 170b.

As the length of the base 172b increases, the sensor unit 170b may be sufficiently deformed so that an inductance change required for puff detection may be sensed even though the sensor unit 170b is disposed at a deep position inside the aerosol-generating device, in which the airflow acts relatively weakly.

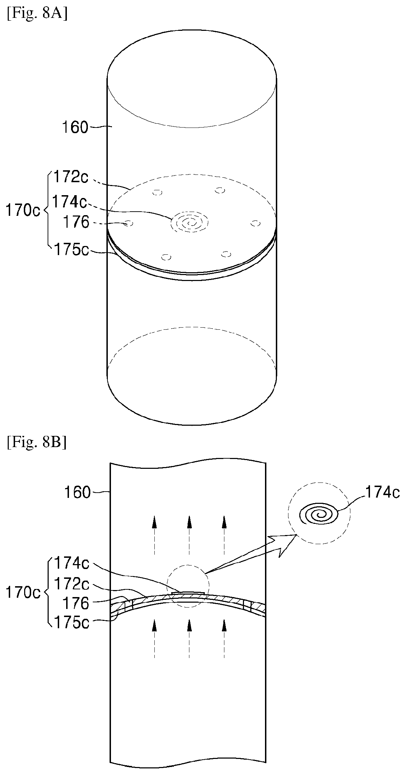

FIG. 8A is a view illustrating an aspect of a sensor unit according to another embodiment of the present disclosure, and FIG. 8B is a view illustrating another aspect of the sensor unit according to another embodiment of the present disclosure.

Referring to FIGS. 8A and 8B, a sensor unit 170c may include a plurality of holes 176 allowing the passage of an airflow, and may be disposed to cover at least a portion of a cross-sectional area of an airflow passage 160. In this case, the airflow passage 160 shown in FIGS. 8A and 8B may be a point of the airflow passage 160 shown in FIGS. 1 to 3.

A base 172c may be attached to the airflow passage 160 along the edge of the inner circumferential surface of the airflow passage 160 or in a circumferential direction of the inner circumferential surface of the airflow passage 160. For example, the base 172c may be coupled, bonded, or welded to the airflow passage 160 in the circumferential direction of the inner circumferential surface of the airflow passage 160, but is not limited thereto.

The plurality of holes 176 through which an airflow may pass may be disposed in at least one region of the base 172c, and an inductor 174c may be disposed in another region of the base 172. For example, the inductor 174c may be disposed in a central portion of the base 172c, and the plurality of holes 176 may be disposed at an edge portion of the base 172c.

A panel 175c may be disposed to be apart from the inductor 174c by a certain distance, and may be positioned not to cover the holes 176 in the base 172c. In addition, the panel 175c may be disposed in a direction (e.g., under the base 172c) opposite to a direction of the flow of the airflow, and may be pressed by the flow of the airflow.

Although at least a portion of the airflow passage 160 is obscured by the sensor unit 170c, as the base 172c includes the plurality of holes 176, a portion of the airflow may pass through the plurality of holes 176 and flow along the airflow passage 160. In this case, the remaining airflow that does not pass through the plurality of holes 176 may apply pressure to the base 172c to cause deformation of the base 172c.

Referring to FIG. 8A, when an airflow does not flow in the airflow passage 160 , the shape of the sensor unit 170c may not be deformed, and an inductance change according to a change in the distance between the inductor 174c and the panel 175c may not be sensed. However, referring to FIG. 8B, when an airflow flows in the airflow passage 160, the shape of the sensor unit 170 may be deformed, and thus, the distance between the inductor 174c and the panel 175c may be changed and an inductance change may be sensed.

For example, a central portion of the base 172c and/or panel 175c deformed by the airflow may be convex in a direction of the airflow, and in response to the deformation of the base 172c and/or panel 175c, the distance between the inductor 174c disposed in the central portion of the base 172c and the panel 175c may be changed, and as a result, an inductance change may be sensed by the sensor unit 170c.

Unlike in FIGS. 8A and 8B, the base 172c may include more holes 176, and accordingly, although the sensor unit 170c is disposed to cover at least a portion of the airflow passage 160, the flow of an airflow flowing inside the aerosol-generating device may be smooth.

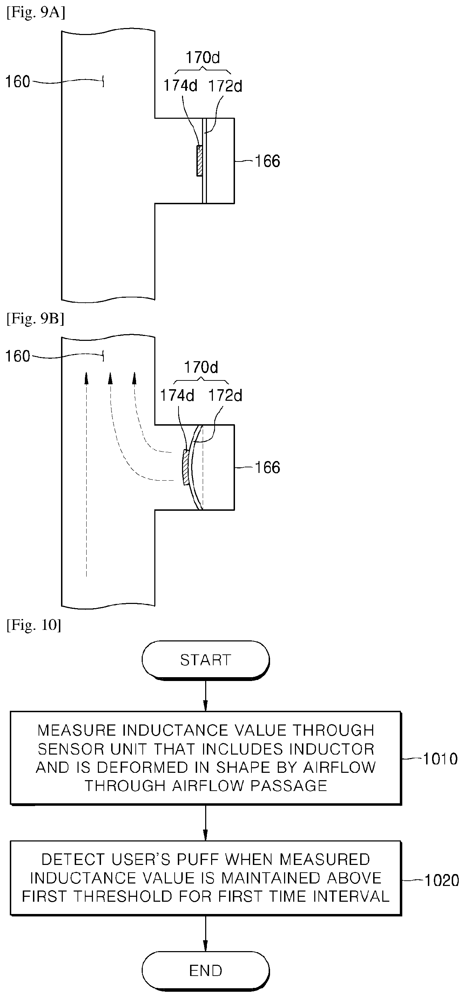

FIG. 9A is a view illustrating an aspect of a sensor unit according to another embodiment, and FIG. 9B is a view illustrating another aspect of the sensor unit according to another embodiment.

Referring to FIGS. 9A and 9B, an aerosol-generating device according to another embodiment of the present disclosure may further include a chamber 166 branched at one point of an airflow passage 160 so that an airflow may enter and exit.

The chamber 166 may be a separate space in which a sensor unit 170d may be disposed, and may be located branching from one point of the airflow passage 160 in a direction toward the outside of the airflow passage 160. For example, the chamber 166 may be a space formed by extending the cross-section of the airflow passage 160 at one point of the airflow passage 160. As another example, the chamber 166 may be a separate space extending along a passage branched at one point of the airflow passage 160.

As the sensor unit 170d is disposed in the chamber 166, the sensor unit 170d may measure or sense a change in the inductance of the inductor 174d at a position that does not interfere with the flow of an airflow flowing along the airflow passage 160.

In an embodiment, a base 172d may be disposed to cover at least a portion of the chamber 166. For example, the base 172d may be in the form of a beam, and both ends of the beam may be attached to the inner wall of the chamber 166 and disposed to cover a portion of the cross-sectional area of the chamber 166. As another example, the base 172d may be in the form of a film, and may be attached to the inner wall of the chamber 166 and disposed to cover the entire cross-sectional area of the chamber 166, and the inductor 174d may be included in the base 172d having the form of a film.

The sensor unit 170d disposed on the inner wall of the chamber 166 may not obstruct the flow of airflow and may be firmly fixed to the inner wall of the chamber 166, and thus, structural stability of the sensor unit 170d may be improved.

Referring to FIG. 9A, when an airflow does not flow in the airflow passage 160, the shape of the sensor unit 170d may not be deformed, and thus, an inductance change may not be sensed. However, referring to FIG. 9B, when an airflow flows in the airflow passage 160, the shape of the sensor unit 170d may be deformed, and thus, an inductance change may be sensed.

For example, a portion of an airflow formed by a user's inhalation may form a negative pressure in the chamber 166 and thus the base 172d may be deformed, and accordingly, the distance between the inductor 174d and a panel may be changed. As a result, the inductance of the inductor 174d may be changed.

FIG. 10 is a flowchart illustrating an operating method of an aerosol-generating device according to an embodiment of the present disclosure.

Referring to FIG. 10, the operating method of the aerosol-generating device includes operations processed in time series in the aerosol-generating devices 100a, 100b, and 100c shown in FIGS. 1 to 3. Accordingly, even though omitted below, the descriptions given above with respect to the aerosol-generating devices 100a, 100b, and 100c of FIGS. 1 to 3 may also be applied to the operating method of FIG. 10.

In operation 1010, a processor may measure an inductance value through a sensor unit. In this case, the sensor unit may include an inductor and may be deformed in shape by an airflow flowing through an airflow passage.

The processor may measure an inductance value of the inductor in the sensor unit every certain time. For example, the processor may measure and/or record the inductance value of the inductor in the sensor unit every 0.01 seconds. In addition, the processor may use the recorded inductance value to generate a graph (e.g., the graph of FIG. 4) or trend line indicating a change in the inductance value over time.

According to an additional embodiment, in operation 1010 of measuring the inductance value, the processor may determine whether a heater for heating an aerosol-generating material is in operation, and if it is determined that the heater is in operation, the processor may measure the inductance value. Accordingly, the processor may prevent power wastage caused by continuously measuring and/or recording the inductance value when the heater is not in operation.

In operation 1020, the processor may detect a puff based on the measured inductance value being maintained above a first threshold for a first time interval. For example, based on the inductance value being maintained at a value large enough to be regarded as due to a user's inhalation through the aerosol-generating device for a predetermined time, the processor may determine that the user's inhalation has occurred and detect a puff.

Specifically, by using the data on an inductance value for each time measured or recorded in operation 1010, the processor may detect a puff by determining that the user's inhalation has occurred when the inductance value is maintained above a threshold for a predetermined time.

In another embodiment, the processor may detect a puff based on the measured inductance value being maintained above the first threshold for the first time interval and then being maintained above a second threshold for a second time interval. In this case, the second time interval may be less than the first time interval, and the second threshold may be less than the first threshold.

In this way, the processor may implement a more accurate puff detection function by additionally considering not only an inhalation start process in which the inductance value is increased and maintained but also an inhalation end process in which the inductance value is restored.

According to an additional embodiment, in the operation of detecting the puff, the processor may determine whether the heater for heating the aerosol-generating material is in operation, and if it is determined that the heater is in operation, the processor may detect the puff. Accordingly, the processor may prevent power wastage caused by processing a process of continuously detecting a puff when the heater is not in operation.

In another embodiment, the processor may output a notification of a detected puff in a predetermined method. The predetermined method may include at least one of a visual method, an auditory method, and a tactile method. The processor may control a user interface to output the notification of the detected puff.

For example, the processor may display the number of detected puffs on a display. As another example, when the number of remaining puffs reaches a predetermined number, the processor may output a speaker notification or control a vibration motor to vibrate.

## Claims

1. An aerosol-generating device comprising:
a housing (101) comprising an airflow passage (160) into which external air is introduced;
a sensor unit (170) comprising an inductor (174), the sensor unit (170) being disposed in the airflow passage (160) configured to deform in shape based on an airflow through the airflow passage (160); and
a processor (120) connected to the sensor unit (170),
wherein the processor is configured to:
measure an inductance value, of the inductor (174), that changes according to a degree of deformation of the sensor unit (170); and
detect a puff of a user based on the measured inductance value being maintained above a first predetermined threshold for a first predetermined time interval and then being maintained above a second predetermined threshold for a second predetermined time interval;
wherein the second predetermined threshold is less than the first predetermined threshold, and the second predetermined time interval is less than the first predetermined time interval.

2. The aerosol-generating device of claim 1, further comprising a user interface,
wherein the processor is further configured to control the user interface of the aerosol-generating device to output an indication of the detected puff to the user.

3. The aerosol-generating device of claim 2, wherein the user interface is configured output the indication visually, auditorily, or haptically.

4. The aerosol-generating device of claim 1, further comprising a heater configured to heat an aerosol-generating material,
wherein the processor is further configured to control power applied to the heater based upon detecting the puff of the user.

5. The aerosol-generating device of claim 1, further comprising a heater configured to heat an aerosol-generating material, wherein the processor is further configured to detect the puff of the user based on the heater being activated.

6. The aerosol-generating device of claim 1, wherein the sensor unit further comprises:
a panel that is configured to deform based on the airflow; and
a base on which the panel and the inductor are disposed,
wherein the inductance value of the inductor changes in response to deformation of at least one of the panel and the base.

7. The aerosol-generating device of claim 6, wherein the base comprises a cantilever, and the cantilever protrudes from an inner surface of the airflow passage.

8. The aerosol-generating device of claim 6, wherein the base comprises a plurality of holes allowing passage of the airflow, and the base covers at least a portion of the airflow passage.

9. The aerosol-generating device of claim 6, further comprising a chamber branched at one point of the airflow passage so that the airflow enters the chamber from the airflow passage and exits the chamber to the airflow passage, wherein the sensor unit is disposed in the chamber.

10. The aerosol-generating device of claim 9, wherein the base covers at least a portion of the chamber.

11. The aerosol-generating device of claim 1, wherein the inductor comprises a planar coil.

12. The aerosol-generating device of claim 1, wherein the sensor unit comprises an array of a plurality of inductors, including the inductor, and
the plurality of inductors comprises a plurality of planar coils.

13. An operating method of an aerosol-generating device, the operating method comprising:
measuring an inductance value through a sensor unit of the aerosol-generating device, the sensor unit including an inductor, the sensor unit being disposed in an airflow passage into which external air is introduced and configured to deform in shape based on an airflow through an airflow passage of the aerosol-generating device; and
detecting a puff of a user based on the measured inductance value being maintained above a first predetermined threshold for a first predetermined time interval and then being maintained above a second predetermined threshold for a second predetermined time interval;
wherein the second predetermined threshold is less than the first predetermined threshold, and the second predetermined time interval is less than the first predetermined time interval.

## Patentansprüche

1. Aerosol erzeugende Vorrichtung, die Folgendes umfasst:
ein Gehäuse (101), das einen Luftstromkanal (160) umfasst, in den Außenluft eingeleitet wird;
eine Sensoreinheit (170), die einen Induktor (174) umfasst, wobei die Sensoreinheit (170) in dem Luftstromkanal (160) angeordnet und dazu konfiguriert ist, sich in ihrer Form basierend auf einem Luftstrom durch den Luftstromkanal (160) zu verformen; und
einen Prozessor (120), der mit der Sensoreinheit (170) verbunden ist,
wobei der Prozessor für Folgendes konfiguriert ist:
Messen eines Induktivitätswerts des Induktors (174), der sich entsprechend einem Verformungsgrad der Sensoreinheit (170) ändert; und
Erkennen eines Zugs eines Benutzers basierend darauf, dass der gemessene Induktivitätswert für ein erstes vorbestimmtes Zeitintervall über einem ersten vorbestimmten Schwellenwert gehalten wird und danach für ein zweites vorbestimmtes Zeitintervall über einem zweiten vorbestimmten Schwellenwert gehalten wird;
wobei der zweite vorbestimmte Schwellenwert geringer ist als der erste vorbestimmte Schwellenwert und das zweite vorbestimmte Zeitintervall kürzer ist als das erste vorbestimmte Zeitintervall.

2. Aerosol erzeugende Vorrichtung nach Anspruch 1, die ferner eine Benutzerschnittstelle umfasst, wobei der Prozessor ferner dazu konfiguriert ist, die Benutzerschnittstelle der Aerosol erzeugenden Vorrichtung zu steuern, um eine Anzeige des erkannten Zugs an den Benutzer auszugeben.

3. Aerosol erzeugende Vorrichtung nach Anspruch 2, wobei die Benutzerschnittstelle dazu konfiguriert ist, die Anzeige visuell, akustisch oder haptisch auszugeben.

4. Aerosol erzeugende Vorrichtung nach Anspruch 1, die ferner eine Heizvorrichtung umfasst, die dazu konfiguriert ist, ein Aerosol erzeugendes Material zu erwärmen,
wobei der Prozessor ferner dazu konfiguriert ist, die auf die Heizvorrichtung angewandte Leistung basierend auf dem Erkennen des Zugs des Benutzers zu steuern.

5. Aerosol erzeugende Vorrichtung nach Anspruch 1, die ferner eine Heizvorrichtung umfasst, die dazu konfiguriert ist, ein Aerosol erzeugendes Material zu erwärmen,
wobei der Prozessor ferner dazu konfiguriert ist, den Zug des Benutzers basierend darauf zu erkennen, dass die Heizvorrichtung aktiviert wird.

6. Aerosol erzeugende Vorrichtung nach Anspruch 1, wobei die Sensoreinheit ferner Folgendes umfasst:
eine Platte, die dazu konfiguriert ist, sich basierend auf dem Luftstrom zu verformen; und
eine Basis, auf der die Platte und der Induktor angeordnet sind,
wobei sich der Induktivitätswert des Induktors in Reaktion auf die Verformung der Platte und/oder der Basis ändert.

7. Aerosol erzeugende Vorrichtung nach Anspruch 6, wobei die Basis eine Auskragung umfasst und die Auskragung von einer Innenfläche des Luftstromkanals vorsteht.

8. Aerosol erzeugende Vorrichtung nach Anspruch 6, wobei die Basis eine Vielzahl von Löchern aufweist, die einen Durchfluss des Luftstroms ermöglichen, und die Basis mindestens einen Abschnitt des Luftstromkanals abdeckt.

9. Aerosol erzeugende Vorrichtung nach Anspruch 6, die ferner eine Kammer umfasst, die an einer Stelle des Luftstromkanals abzweigt, so dass der Luftstrom aus dem Luftstromkanal in die Kammer eintritt und aus der Kammer in den Luftstromkanal austritt,
wobei die Sensoreinheit in der Kammer angeordnet ist.

10. Aerosol erzeugende Vorrichtung nach Anspruch 9, wobei die Basis mindestens einen Abschnitt der Kammer abdeckt.

11. Aerosol erzeugende Vorrichtung nach Anspruch 1, wobei der Induktor eine planare Spule umfasst.

12. Aerosol erzeugende Vorrichtung nach Anspruch 1, wobei die Sensoreinheit eine Anordnung aus einer Vielzahl von Induktoren, einschließlich des Induktors, umfasst, und
die Vielzahl von Induktoren eine Vielzahl von planaren Spulen umfasst.

13. Betriebsverfahren für eine Aerosol erzeugende Vorrichtung, wobei das Betriebsverfahren Folgendes umfasst:
Messen eines Induktivitätswerts durch eine Sensoreinheit der Aerosol erzeugenden Vorrichtung, wobei die Sensoreinheit einen Induktor enthält, wobei die Sensoreinheit in einem Luftstromkanal angeordnet ist, in den Außenluft eingeleitet wird, und dazu konfiguriert ist, sich in ihrer Form basierend auf einem Luftstrom durch einen Luftstromkanal der Aerosol erzeugenden Vorrichtung zu verformen; und
Erkennen eines Zugs eines Benutzers basierend darauf, dass der gemessene Induktivitätswert für ein erstes vorbestimmtes Zeitintervall über einem ersten vorbestimmten Schwellenwert gehalten wird und danach für ein zweites vorbestimmtes Zeitintervall über einem zweiten vorbestimmten Schwellenwert gehalten wird;
wobei der zweite vorbestimmte Schwellenwert geringer ist als der erste vorbestimmte Schwellenwert und das zweite vorbestimmte Zeitintervall kürzer ist als das erste vorbestimmte Zeitintervall.

## Revendications

1. Dispositif de génération d'aérosol comprenant :
un boîtier (101) comprenant un passage d'écoulement d'air (160) dans lequel de l'air extérieur est introduit ;
une unité de capteur (170) comprenant un inducteur (174), l'unité de capteur (170) étant disposée dans le passage d'écoulement d'air (160) et configurée pour se déformer en raison d'un flux d'air à travers le passage d'écoulement d'air (160) ; et
un processeur (120) connecté à l'unité de capteur (170),
dans lequel le processeur est configuré pour :
mesurer une valeur d'inductance de l'inducteur (174), laquelle varie en fonction d'un degré de déformation de l'unité de capteur (170) ; et
détecter une bouffée d'un utilisateur sur la base de la valeur d'inductance de l'inducteur maintenue au-dessus d'un premier seuil prédéterminé pour un premier intervalle de temps prédéterminé et ensuite maintenue au-dessus d'un deuxième seuil prédéterminé pour un deuxième intervalle de temps prédéterminé ;
dans lequel le deuxième seuil prédéterminé est inférieur au premier seuil prédéterminé, et le deuxième intervalle de temps prédéterminé est inférieur au premier intervalle de temps prédéterminé.

2. Dispositif de génération d'aérosol selon la revendication 1, comprenant en outre une interface d'utilisateur,
dans lequel le processeur est en outre configuré pour commander l'interface d'utilisateur du Dispositif de génération d'aérosol de manière à fournir une indication de la bouffée détectée à l'utilisateur.

3. Dispositif de génération d'aérosol selon la revendication 2, dans lequel l'interface d'utilisateur est configurée pour fournir l'indication visuellement, auditivement ou tactilement.

4. Dispositif de génération d'aérosol selon la revendication 1, comprenant en outre un élément chauffant configuré pour chauffer un matériau de génération d'aérosol,
dans lequel le processeur est en outre configuré pour commander une puissance appliquée à l'élément chauffant sur la base de la détection de la bouffée de l'utilisateur.

5. Dispositif de génération d'aérosol selon la revendication 1, comprenant en outre un élément chauffant configuré pour chauffer un matériau de génération d'aérosol,
dans lequel le processeur est en outre configuré pour détecter la bouffée de l'utilisateur sur la base de l'activation de l'élément chauffant.

6. Dispositif de génération d'aérosol selon la revendication 1, dans lequel
l'unité de capteur comprend en outre :
un panneau configuré pour se déformer en raison du flux d'air ; et
une base sur laquelle le panneau et l'inducteur sont disposés,
dans lequel la valeur d'inductance de l'inducteur varie en réponse à la déformation de l'un au moins parmi le panneau et la base.

7. Dispositif de génération d'aérosol selon la revendication 6, dans lequel la base comprend un porte-à-faux, et le porte-à-faux fait saillie à partir d'une surface intérieure du passage d'écoulement d'air.

8. Dispositif de génération d'aérosol selon la revendication 6, dans lequel la base comprend une pluralité de trous permettant le passage du flux d'air, et la base recouvre au moins une partie du passage d'écoulement d'air.

9. Dispositif de génération d'aérosol selon la revendication 6, comprenant en outre une chambre ramifiée en un point du passage d'écoulement d'air, de sorte que le flux d'air entre dans la chambre à partir du passage d'écoulement d'air et sort de la chambre vers le passage d'écoulement d'air,
dans lequel l'unité de capteur est disposée dans la chambre.

10. Dispositif de génération d'aérosol selon la revendication 9, dans lequel la base recouvre au moins une partie de la chambre.

11. Dispositif de génération d'aérosol selon la revendication 1, dans lequel l'inducteur comprend une bobine planaire.

12. Dispositif de génération d'aérosol selon la revendication 1, dans lequel l'unité de capteur comprend un réseau comprenant une pluralité d'inducteurs, incluant l'inducteur, et
la pluralité d'inducteurs comprend une pluralité de bobines planaires.

13. Procédé de fonctionnement d'un Dispositif de génération d'aérosol, le procédé de fonctionnement comprenant :
la mesure d'une valeur d'inductance par une unité de capteur du Dispositif de génération d'aérosol, l'unité de capteur incluant un inducteur, l'unité de capteur étant disposée dans un passage d'écoulement d'air dans lequel de l'air extérieur est introduit, et configurée pour se déformer en raison d'un flux d'air à travers un passage d'écoulement d'air du Dispositif de génération d'aérosol ; et
la détection d'une bouffée d'un utilisateur sur la base de la valeur d'inductance mesurée maintenue au-dessus d'un premier seuil prédéterminé pour un premier intervalle de temps prédéterminé et ensuite maintenue au-dessus d'un deuxième seuil prédéterminé pour un deuxième intervalle de temps prédéterminé ;
dans lequel le deuxième seuil prédéterminé est inférieur au premier seuil prédéterminé, et le deuxième intervalle de temps prédéterminé est inférieur au premier intervalle de temps prédéterminé.
